# EUROPÄISCHE PATENTSCHRIFT

(11) **EP 1 886 947 B1**
(45) Veröffentlichungstag und Bekanntmachung des Hinweises auf die Patenterteilung: **27.05.2009**
(21) Anmeldenummer: 07015459.6
(22) Anmeldetag: 07.08.2007
(51) Int. Cl.: B65G 47/34, B65G 47/82, B07C 5/12, B07C 5/36

(54) **Vorrichtung zum Entfernen von Behältern von einem Förderer**
Device for removing containers from a transporter
Dispositif destiné à retirer des récipients d'un transporteur

(30) Priorität: 07.08.2006 DE 202006012175 U; 07.03.2007 DE 102007011057
(43) Veröffentlichungstag der Anmeldung: 13.02.2008
(73) Patentinhaber: KRONES AG, 93073 Neutraubling (DE)
(72) Erfinder: Graf, Frank, 67724 Gonbach (DE); Flesch, Dirk, 66701 Beckingen (DE); Dünzinger, Bernhard, 84069 Unterdeggenbach (DE); Büker, Lutz, 93426 Roding (DE); Deyerling, Alexander, 93077 Bad Abbach (DE)

(56) Entgegenhaltungen:
- DE-A1- 3 918 469
- DE-U1- 8 903 180
- DE-U1-5202006 012 17
- US-A- 3 659 710

## Beschreibung

Die Erfindung betrifft eine Vorrichtung zum Entfernen von Behältern von einem Förderer gemäß dem Oberbegriff des Anspruchs 1.

Derartige Vorrichtungen werden insbesondere in Behälterbehandlungsanlagen, beispielsweise Flaschenfüllanlagen, eingesetzt und dienen dazu, unerwünschte Behälter wie Fremdflaschen, Schmutzflaschen oder dgl. von den einwandfreien Behältern auf dem Förderer zu trennen.

Durch den Auswurfschacht wird sichergestellt, dass die unter Umständen mit hoher Energie vom Förderer weg bewegten Behälter sicher aufgefangen und dem Sammelbehälter zugeführt werden.

Es hat sich jedoch gezeigt, dass insbesondere beim Ausscheiden von Glasflaschen mittels impulsgesteuerter Stößel oder dgl. ab und zu Flaschen im Auswurfschacht oder im Sammelbehälter zerbrechen und die dabei entstehenden Scherben und Glassplitter in den Weg der ordnungsgemäßen Flaschen gelangen und diese kontaminieren können.

Aus DE 89 03 180 U1 ist eine Sortiereinrichtung zum Aussondern von abnormalen Gefäßen bekannt, die über ein Paar von einem Förderweg schräg nach oben ansteigende Förderriemen verfügt, mit deren Hilfe ein Herausheben der abnormalen Gefäße möglich ist. Die auszusondernden Gefäße können dann beispielsweise über Rutsche einen Sammelbehälter zugeführt werden. Auch hier kann eine Gefährdung durch Scherben auftreten.

Der Erfindung liegt die Aufgabe zu Grunde, bei einer Vorrichtung der eingangs genannten Art eine Verunreinigung nicht entfernter Behälter durch Behälterbruchstücke wie Glassplitter oder dgl. mit einfachen Mitteln zuverlässig zu verhindern.

Diese Aufgabe wird erfindungsgemäß durch die im Kennzeichen des Anspruchs 1 angegebenen Merkmale gelöst.

Ein erfindungsgemäßer Vorhang an der Eintrittsöffnung des Auffangschachts lässt sich mit einfachen Mitteln so gestalten, dass er nur ganze Behälter, nicht aber Behälterbruchstücke, Scherben usw. durchlässt. Einige bevorzugte Ausgestaltungen sind in den Unteransprüchen angegeben.

Im Nachstehenden wird ein Ausführungsbeispiel der Erfindung anhand der Zeichnungen erläutert. Es zeigen:
- Fig. 1: die Seitenansicht einer Vorrichtung zum Entfernen von Flaschen von einem Förderer
- Fig. 2: die Ansicht A nach Fig. 1 ohne Förderer.

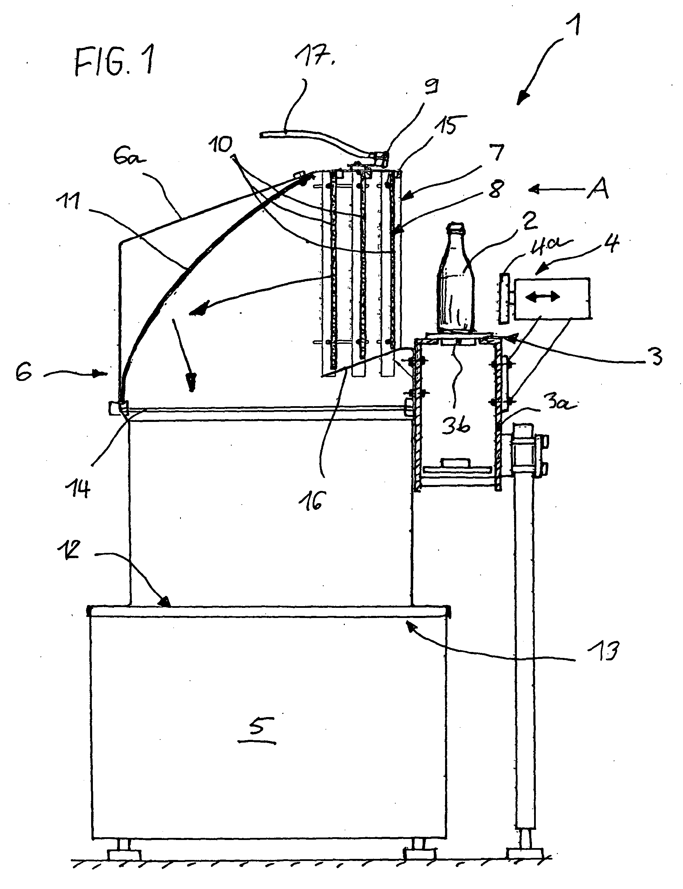

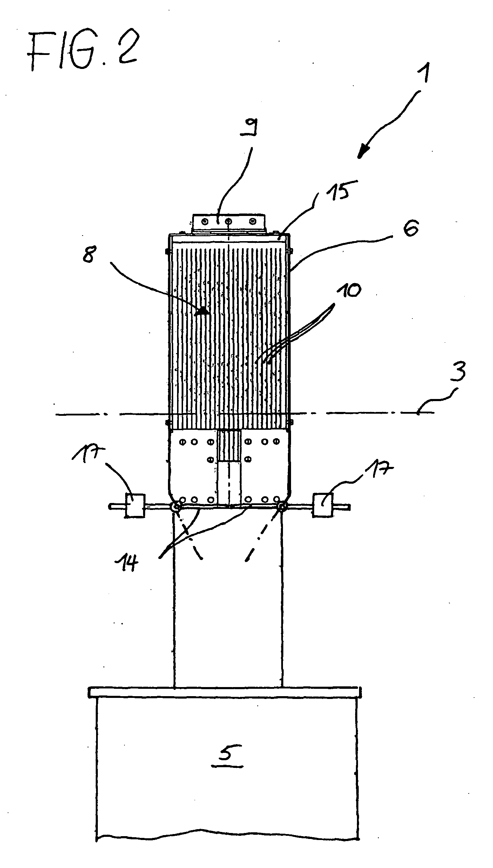

Die Vorrichtung 1 nach Fig. 1 und 2 ist zum Ausscheiden bzw. Aussortieren von Behältern 2 in Form von leeren Glasflaschen für Getränke eingerichtet, die auf einem Förderer 3 in einer Reihe transportiert werden. Beim Förderer 3 handelt es sich um einen herkömmlichen Scharnierbandkettenförderer mit einem Tragrahmen 3a und einer darauf laufenden endlosen Scharnierbandkette 3b mit horizontaler Förderfläche.

Die Vorrichtung 1 weist ein Ausstoßorgan 4 mit einem pneumatisch betätigten Stößel 4a auf, der quer zur Scharnierbandkette 3b impulsweise vor- und zurück bewegbar ist und dabei einen bestimmten Behälter 2 seitlich vom Förderer 3 entfernt. Das Ausstoßorgan 4 wird beispielsweise durch eine nicht gezeigte vorgeschaltete Kontrolleinrichtung zum Registrieren von nicht zur Abfüllung bestimmten Fremdflaschen gesteuert.

Weiter umfasst die Vorrichtung 1 einen auf der dem Ausstoßorgan 4 gegenüberliegenden Seite des Förderers 3 angeordneten Schacht 6 mit einer Eintrittsöffnung 7 und einer Austrittsöffnung 12, der die vom Ausstoßorgan 4 aussortierten Behälter 2 aufnimmt und mittels Schwerkraft einem darunter liegenden Sammelbehälter 5 für ausgestoßene Behälter 2 zuführt.

Der Schacht 6 ist aus Blechplatten gefertigt und weist einen im Wesentlichen rechteckigen Querschnitt auf, wobei die Eintrittsöffnung 7 für die Behälter 2 im Wesentlichen senkrecht und die Austrittsöffnung 12 für die Behälter 2 im Wesentlichen horizontal liegt. Die Eintrittsöffnung 7 ist größer als der Querschnitt eines Behälters 2 und durch einen behälterdurchlässigen Vorhang 8 vollständig abgedeckt.

Der Vorhang 8 besteht aus senkrechten Lamellen 10 aus flexiblem Kunststoff mit einer Breite von ca. 20 mm und einer Dicke von ca. 0,5 mm. Die Lamellen 10 sind an ihrem oberen Ende an einem Rahmen 15 befestigt und hängen frei nach unten. An ihrem unteren Ende können sie zur Erhöhung des Gewichts umgeschlagen oder mit Gewichten besetzt sein. Die Lamellen enden an einer schrägen Rutsche 16 im Schacht 6.

Der durch die Lamellen 10 gebildete Vorhang 8 schließt im Normalfall den Schacht 6 nach außen hin vollständig ab, so dass keinerlei Scherben, Glassplitter oder dgl. aus dem Schacht 6 bzw. dem Sammelbehälter 5 nach außen zu den auf dem Förderer 3 geförderten Behältern 2 durchdringen können. Andererseits sind die Lamellen 10 ausreichend nachgiebig, um beim Ausstoßen eines Behälters 2 dessen Eintritt in den Schacht 6 nicht zu behindern. Wie die Fig. 1 zeigt, besteht der Vorhang 8 aus drei mit Abstand angeordneten parallelen Schichten von Lamellen 10, wodurch eine besonders gute Abdichtung realisiert wird. Die Lamellen 10 der einzelnen Schichten sind unterschiedlich lang und enden jeweils an der schrägen Rutsche 16.

Zwischen der ersten und der zweiten Schicht von Lamellen 10 ist an der Oberseite des Schachts 6 eine breite Schlitzdüse 9 angeordnet, die über einen Schlauch 17 mit Druckluft versorgt wird. Der aus der Schlitzdüse 9 austretende Luftstrahl bewegt sich zwischen der ersten und der zweiten Schicht von Lamellen 10 nach unten und bewirkt, dass diese Lamellen nach dem Durchtritt eines Behälters 2 sofort wieder in ihre Ausgangslage zurückkehren. Zusätzlich wirkt der Luftstrahl dem Austreten von Scherben oder dgl. entgegen. Die Schlitzdüse 9 kann durchgehend mit Druckluft beschickt oder auch gepulst betrieben werden, insbesondere gesteuert durch das Ausstoßorgan 4. Auf diese Weise wird unnötiger Luftverbrauch vermieden.

Die obere Wand 6a des Schachts 6 ist vom Förderer 3 weg abfallend schräg gestellt und trägt ein flexibles Element 11 in Form einer oder mehreren Blattfedern, die den Aufprall eines Behälters 2 mildern und diesen nach unten hin umlenken.

Im Bereich zwischen der Eintrittsöffnung 7 und der Austrittsöffnung 12 des Schachts 6 sind zwei bewegliche Rückschlagklappen 14 mit horizontaler Drehachse angeordnet, die mittels Gewichten 17 und nicht gezeichneten Anschlägen in einer horizontalen Ruheposition fixiert sind, in der sie den Schacht 6 über seinen gesamten Querschnitt verschließen.

Fällt ein ausgestoßener Behälter 2 auf die Rückschlagklappen 14, so können diese nach unten hin wegschwenken und die Behälter 2 passieren lassen, wie in Fig. 2 strichpunktiert angedeutet ist. Die Rückschlagklappen 14 bilden eine zusätzliche Sperre gegen das Austreten von Scherben oder dgl., aus dem Sammelbehälter 5. Die Rückschlagklappen 14 können auch im Bereich der Eintrittsöffnung 13 des Sammelbehälters 5 angeordnet sein. Anstelle der Gewichte 17 können auch Federelemente vorgesehen sein. Ferner ist es möglich, die Rückschlagklappen 14 aktiv anzusteuern, beispielsweise durch einen Pneumatikzylinder, wenn das Ausstoßorgan 4 betätigt wird.

Der behälterdurchlässige und scherbenundurchlässige Vorhang 8 kann auch aus anderen Elementen gebildet werden, z.B. aus Borsten. Diese können an den beiden Seitenwänden angeordnet und zur Mitte der Einlassöffnung 7 hin ausgerichtet sein. Auch können verschiedene Elemente eines ein- oder mehrreihigen Vorhangs kombiniert werden. Das Ausstoßorgan kann beliebig ausgebildet sein, beispielsweise weichen- oder igelartig.

## Patentansprüche

1. Vorrichtung (1) zum Entfernen von Behältern (2) von einem Förderer (3) mit einem Ausstoßorgan (4) und einem die ausgestoßenen Behälter aufnehmenden und einem Sammelbehälter (5) zuführenden Schacht (6) mit einer Eintrittsöffnung (7) für die Behälter, **dadurch gekennzeichnet, dass** im Bereich der Eintrittsöffnung (7) des Schachts (6) ein für Behälter (2) durchlässiger Vorhang (8) vorgesehen ist, der aus mehreren Schichten besteht.

2. Vorrichtung nach Anspruch 1, **dadurch gekennzeichnet, dass** der Vorhang (8) für kleine Behälterbruchstücke, Scherben oder dgl. undurchlässig ist.

3. Vorrichtung nach Anspruch 1 oder 2, **dadurch gekennzeichnet, dass** der Vorhang (8) die Eintrittsöffnung (7) vollständig abdeckt.

4. Vorrichtung nach einem der Ansprüche 1 bis 3, **dadurch gekennzeichnet, dass** der Vorhang (8) durch ein aus mindestens einer Düse (9) austretendes Fluid, insbesondere Luft, gebildet wird.

5. Vorrichtung nach einem der Ansprüche 1 bis 4, **dadurch gekennzeichnet, dass** der Vorhang durch mehrere flexible Lamellen (10), vorzugsweise aus Kunststoff, gebildet wird.

6. Vorrichtung nach Anspruch 4 und 5, **dadurch gekennzeichnet, dass** die mindestens eine Düse (9) in Bewegungsrichtung der Behälter (2) gesehen hinter oder zwischen Lamellen (10) angeordnet ist.

7. Vorrichtung nach einem der Ansprüche 1 bis 6, **dadurch gekennzeichnet, dass** die obere Wand (6a) des Schachts (6) nach unten hin abgeschrägt und/oder abgerundet ist derart, dass die ausgestoßenen Behälter (2) nach unten hin umgeleitet werden.

8. Vorrichtung nach einem der Ansprüche 1 bis 7, **dadurch gekennzeichnet, dass** hinter der Eintrittsöffnung (7) ein den Aufprall der ausgestoßenen Behälter (2) dämpfendes flexibles Element (11) angeordnet ist,

9. Vorrichtung nach einem der Ansprüche 1 bis 8, **dadurch gekennzeichnet, dass** im Bereich der Austrittsöffnung (12) des Schachts (6) und/oder im Bereich der Eintrittsöffnung (13) des Sammelbehälters (5) mindestens eine schwenkbare Rückschlagklappe (14) vorgesehen ist.

10. Vorrichtung nach Anspruch 9, **dadurch gekennzeichnet, dass** die Rückschlagklappe (14) durch ein Gewicht (17) oder ein Federelement in der geschlossenen Position fixierbar ist.

11. Vorrichtung nach Anspruch 9 oder 10, **dadurch gekennzeichnet, dass** die Rückschlagklappe (14) durch ein Stellorgan in die geöffnete Position überführbar ist.

## Claims

1. Device (1) for removing containers (2) from a transporter (3), comprising an ejecting member (4) and a shaft (6) which receives the ejected containers and feeds them to a collecting container (5), said shaft having an entry opening (7) for the containers, **characterised in that** a curtain (8) which is made from a plurality of layers and which is permeable to the containers (2) is provided in the region of the entry opening (7) of the shaft (6).

2. Device according to claim 1, **characterised in that** the curtain (8) is impermeable to small container fragments, shards or the like.

3. Device according to claim 1 or 2, **characterised in that** the curtain (8) entirely covers the entry opening (7).

4. Device according to one of the claims 1 to 3, **characterised in that** the curtain (8) is formed by a fluid, in particular air, emerging from at least one nozzle (9).

5. Device according to one of the claims 1 to 4, **characterised in that** the curtain is formed by a plurality of flexible lamellae (10), preferably made from plastics.

6. Device according to claim 4 and 5, **characterised in that** the at least one nozzle (9) is arranged, seen in the movement direction of the containers (2), behind or between the lamellae (10).

7. Device according to one of the claims 1 to 6, **characterised in that** the upper wall (6a) of the shaft (6) is downwardly inclined and/or rounded such that the ejected containers (2) are deflected downwardly.

8. Device according to one of the claims 1 to 7, **characterised in that** a flexible element (11) which dampens the impact of the ejected containers (2) is arranged behind the entry opening (7).

9. Device according to one of the claims 1 to 8, **characterised in that** at least one pivotable non-return flap (14) is provided in the region of the exit opening (12) of the shaft (6) and/or in the region of the entry opening (13) of the collecting container (5).

10. Device according to claim 9, **characterised in that** the non-return flap (14) can be fixed in the closed position by a weight (17) or a spring element.

11. Device according to claim 9 or 10, **characterised in that** the non-return flap (14) can be brought into the open position by an actuating member.

## Revendications

1. Dispositif (1) pour évacuer des récipients (2) d'un transporteur (3) avec un éjecteur (4), et comportant une trémie (6) qui reçoit les récipients éjectés pour les conduire à un réceptacle collecteur (5), la trémie (6) ayant un orifice d'entrée (7) pour les récipients,
**caractérisé en ce que**
la zone de l'orifice d'entrée (7) de la trémie (6), comporte un rideau (8) composé de plusieurs couches et pénétrable aux récipients (2).

2. Dispositif selon la revendication 1,
**caractérisé en ce que**
le rideau (8) est impénétrable aux petits morceaux de récipients, débris ou analogues.

3. Dispositif selon la revendication 1 ou 2,
**caractérisé en ce que**
le rideau (8) couvre complètement l'orifice d'entrée (7).

4. Dispositif selon les revendications 1 à 3,
**caractérisé en ce que**
le rideau (8) est formé par un fluide sortant d'au moins une buse (9), notamment de l'air.

5. Dispositif selon les revendications 1 à 4,
**caractérisé en ce que**
le rideau (8) est formé de plusieurs lamelles souples (10) de préférence en matière plastique.

6. Dispositif selon les revendications 4 et 5,
**caractérisé en ce qu'**
au moins une buse (9) est prévue en aval des lamelles (10) ou entre les lamelles (10) selon la direction de mouvement des récipients (2).

7. Dispositif selon les revendications 1 à 6,
**caractérisé en ce que**
la paroi supérieure (6a) de la trémie (6) est inclinée vers le bas et/ ou est arrondie de façon que les récipients (2) éjectés soient déviés vers le bas.

8. Dispositif selon les revendications 1 à 7,
**caractérisé en ce que**
derrière l'orifice d'entrée (7), il est prévu un élément souple (11) amortissant le choc des récipients éjectés (2).

9. Dispositif selon les revendications 1 à 8,
**caractérisé en ce qu'**
au niveau de l'orifice de sortie (12) de la trémie (6) et/ou au niveau de l'orifice d'entrée (13) du réceptacle collecteur (5), il est prévu au moins un clapet antiretour (14) pivotant.

10. Dispositif selon la revendication 9,
**caractérisé en ce que**
le clapet antiretour (14) est tenu en position fermée par un poids (17) ou un élément de ressort.

11. Dispositif selon la revendication 9 ou 10
**caractérisé en ce que**
le clapet antiretour (14) peut être mis en position ouverte par un organe d'actionnement.
